# EUROPÄISCHE PATENTSCHRIFT

(11) **EP 0 817 933 B1**
(45) Veröffentlichungstag und Bekanntmachung des Hinweises auf die Patenterteilung: **05.07.2000**
(21) Anmeldenummer: 96911986.6
(22) Anmeldetag: 01.04.1996
(51) Int. Cl.: F16K 37/00, G07C 3/00

(54) **VERFAHREN ZUR ÜBERWACHUNG UND ZUM BETRIEB VON INSBESONDERE MOTORGETRIEBENEN ARMATUREN**
PROCESS FOR MONITORING AND OPERATING VALVE UNITS, IN PARTICULAR MOTOR-DRIVEN VALVE UNITS
PROCEDE DE SURVEILLANCE ET D'EXPLOITATION D'ORGANES DE ROBINETTERIE, EN PARTICULIER MOTORISES

(30) Priorität: 31.03.1995 DE 19512238
(43) Veröffentlichungstag der Anmeldung: 14.01.1998
(73) Patentinhaber: Institut für Sicherheitstechnologie (ISTEC) GmbH, 85748 Garching (DE)
(72) Erfinder: POHLUS, Joachim, D-81371 München (DE)
(74) Vertreter: Kern, Ralf M., Dipl.-Ing.
(86) Internationale Anmeldenummer: EP9601427
(87) Internationale Veröffentlichungsnummer: WO9630684

(56) Entgegenhaltungen:
- EP-A- 0 287 299
- EP-A- 0 390 224
- EP-A- 0 629 804
- EP-A- 0 637 713
- WO-A-87/07950
- WO-A-92/14087
- WO-A-93/05378
- US-A- 4 831 873
- US-A- 4 896 101
- US-A- 4 965 513
- US-A- 5 329 465

## Beschreibung

Die Erfindung betrifft ein Verfahren zur Überwachung und zum Betrieb von insbesondere motorgetriebenen Armaturen, wobei mit dem Überwachungsverfahren eine Diagnose zur vorbeugenden Instandhaltung und Schadensverhütung zur betriebssicheren Arbeitsweise der von den Armaturen abhängenden Anlagen ermöglicht wird.

Im Betriebsverhalten von motorgetriebenen Armaturen beispielsweise von Schiebern treten Veränderungen in den Reibbeiwerten der Spindel, der Spindelmutter der Stopfbuchse und der Abdichtfläche beispielsweise bei Keilplatten, bedingt durch Materialbeanspruchung bzw. Abnutzung und Schmierung auf. Die Veränderungen können zu einem Armaturenversagen, wie beispielsweise dem Festsitzen der Spindel oder der Keilplatte bei Plattenschiebern, führen und sind auch von den sich laufend verändernden Umgebungs- bzw. Betriebsbedingungen wie z.B. der Umgebungstemperatur etc. abhängig.

Für sicherheitsrelevante Armaturen, wie in Kernkraftwerken oder Chemieanlagen, ist die störungsfreie Betriebsweise Voraussetzung für die Zuverlässigkeit und Verfügbarkeit von Anlagenkomponenten, und zwar auch bezüglich der Genauigkeit bzw. Ungenauigkeit der Stellwerte, wie bei Regel- oder Steuerbewegungen der Armaturen. Die Prüfung und Diagnose solcher motorgetriebener Armaturen stellt damit eine wichtige Maßnahme zur Gewährleistung der Betriebssicherheit dar.

Überlicherweise werden derartige Armaturen allenfalls für die Instandhaltung - abgesehen von regelmäßigen Wartungsmaßnahmen wie Schmierung und Reinigung - von Zeit zu Zeit ausgebaut bzw. ausgetauscht und in dem aus der Anlage entnommenen Zustand durchgeprüft und - falls notwendig repariert oder bei bereits eingetretener Störung ersetzt. Bei Störungen des Funktionszustandes einer Armatur tritt ein Ausfall der gesamten Anlage, in der die Armatur eingebaut ist, ein, der zur Umsteuerung der Anlage zwingt und sogar Gefahren heraufbeschwören kann.

Die Prüfung der motorgetriebenen Armaturen erfolgt dabei im allgemeinen im ausgebauten Zustand mit Hilfe der Messung und Beurteilung der Motorwirkleistung ohne Berücksichtigung der Betriebsbedingungen. Auf dem Prüfstand erfolgt eine Kalibrierung der Motorwirkleistung bei Messung des Drehmomentes für den separaten gebremsten Stellantrieb allein für die Endlage. Eine Aussage über Zustandsveränderungen des Systems Stellantrieb/Armatur wie Veränderungen in den Reibbeiwerten kann zwar mit Hilfe der Überwachung des erforderlichen Drehmomentes bzw. der Spindelkraft für die Fahrt der Armatur in Auf- und Zu-Richtung getroffen werden. Die Überwachung des Drehmomentes erfordert aber einen hohen Meßaufwand, ist nicht in jedem Fall für Armaturen im eingebauten Zustand möglich, sowie im allgemeinen ohnehin nur als Verschiebewegsignal meßbar. Die Umrechnung des Drehmomentes aus dem Wirkleistungssignal ist nur für einzelne bestimmte Punkte möglich.

Aus der US-A-5,329,465, die als nächtstliegenden Stand der Technik anzusehen ist, ist bereits ein Verfahren zur Überwachung der betriebssicheren Arbeitsweise und zur vorbeugenden Instandhaltung bzw. von Schadensverhütung von Armaturen mit Stellantrieben bekannt, wobei die Armaturen unter Verwertung von Armaturen-Meßdaten bzw. durch spezifische Meßwertaufnehmerermittlungssignale in funktionseingebundenen eingebautem Zustand überwacht werden.

Mit diesem Verfahren kann keine eindeutige Identifikation der Zustandsveränderungen der Einzelkomponenten Armatur, Stellgetriebe und Motor erfolgen.

Aufgabe der vorliegenden Erfindung ist es, diese Nachteile zu vermeiden.

Diese Aufgabe wird dadurch gelöst, daß
a) in einer Kalibriermessung auf dem Prüfstand oder im eingebauten Zustand die analytische Abhängigkeit des Antriebssignals, insbesondere der Motorwirkleistung, von dem erforderlichen Drehmoment für die Armaturenspindel bzw. von der Spindelkraft mit Hilfe der Regressionsanalyse bestimmt wird,
b) Diagnosemessungen im funktionseingebundenen eingebauten Zustand der Armaturdiagnoseparameter oder Merkmale für die Komponente Armatur und die Komponente Stellantrieb separat mit Hilfe der Analyse des Antriebssignals, insbesondere der Motorwirkleistung, und in Verbindung zusätzlicher Meßgrößen wie der Spindelkraft oder der der Spindelkraft proportionalen Kraft am Gehäusedeckel bzw. Gehäuseflansch zwischen Armatur und Stellantrieb sowie des abgeleiteten Drehmomentes auf der Basis statistischer Verfahren ermittelt und z.B. in einer Datenbank abgespeichert werden,
c) Änderungen der definierten Diagnoseparameter bezüglich des Arbeitsbereiches für die Auf- und Zu-Fahrtrichtung der Armatur in Zeitabständen gemessen werden und mit einer Referenzmessung bei gleichen Prüfbedingungen verglichen und separat für Armatur und Stellantrieb als Trend dargestellt werden und
d) Änderungen in bestimmten Parameterzuordnungen oder Merkmalsvektoren für die Diagnose von Armaturen mit Stellantrieb, insbesondere motorgetriebene Armaturen, mit Hilfe von entwickelten Identifikationsverfahren hinsichtlich der Zustandsveränderungen von Armatur und Stellantrieb separat bewertet werden.

Damit erfolgt eine Separation der Veränderungen in den armaturenspezifischen Arbeits-Reibbeiwerten z.B. für die Spindel, die Spindelmutter, die Stopfbuchse und die Abdichtfläche beispielsweise bei Keilplatten auf der Grundlage der Bewertung der ermittelten Merkmalsvektoren.

Erfindungsgemäß wird dabei für die vorbeugende Instandhaltung bzw. Schadensverhütung relevante Information zur Unterstützung erforderlicher Maßnahmen ausgegeben.

Für die Überwachung der Veränderungen im Drehmomentenverlauf kann erfindungsgemäß ein Kraftsignal gemessen an einer Befestigungsschraube am Gehäusedeckel zusätzlich zu der Motorwirkleistung herangezogen werden.

Für das erfingungsgemäße Verfahren, der Überwachung und Diagnose motorgetriebener Armaturen, werden also armaturenspezifische Meßwerte sowohl für den Stellantrieb als auch für die Armaturen, wie der Motorstrom, die Motorspannung, die Motorwirkleistung, das Drehmoment, die Spindelkraft oder die Kraft am Gehäusedeckel, Beschleunigungs- und Temperatursignale digital erfaßt und zeitsynchron zunächst als Normalwerte ermittelt und gespeichert.

Das Signal der Motorwirkleistung ist von dem erforderlichen Drehmoment nichtlinear abhängig und damit für die automatische Zustandsüberwachung geeignet. Mit Hilfe einer Messung des Drehmomentes bzw. äquivalenter Größen, wie des Verschiebeweges der Getriebeschnecke oder der Spindelkraft oder der Kraft am Gehäusedeckel, wird das Wirkleistungssignal kalibriert und die ermittelte Abhängigkeit der Wirkleistung von dem erforderlichen Drehmoment in analytischer Form ermittelt. In den Diagnosemessungen kann damit eine Umrechnung des Wirkleistungssignals in das erforderliche Drehmoment für den kontinuierlichen Zeitverlauf erfolgen.

In der Diagnosemessung werden durch Anwendung statistischer Verfahren der Signalanalyse armaturenspezifische Parameter zur Charakterisierung des Laufverhaltens der Armatur (Merkmale) automatisch bestimmt. Die Änderungen der Diagnoseparameter während des Betriebes der Armatur werden mit einer Referenzmessung verglichen und als Trend dargestellt. Auf der Basis von experimentellen Untersuchungen und modellgestützter Analysen können definierte Parameterverknüpfungen (Markmalsvektoren) bestimmten Ursachen für festgestellte Abweichungen vom normalen Betriebsverhalten der Armatur zugeordnet werden. Dabei wird eine Separation der Veränderungen der Reibbeiwerte von Spindel, Spindelmutter, Stopfbuchse und Abdichtfläche durchgeführt. Die Auswertung der berechneten Parametermuster erfolgt on-line für die Armatur in eingebautem Zustand, mit Hilfe des Analyse-moduls des digitalen Meßwerteerfassungssystems für die Armaturendiagnose.

Auf der Basis der Auswerteergebnisse werden für die vorbeugende Instandhaltung bzw. Schadensverhütung relevante Informationen und Hinweise zur Unterstützung erforderlicher Maßnahmen für das Betriebspersonal automatisch ausgegeben. Damit wird eine deutliche Verbesserung in der Diagnose des Betriebsverhaltens motorgetriebener Armaturen erreicht.

Nachstehend sind das erfindungsgemäße Verfahren und näher erläuterte Darstellungen wiedergegeben.

Fig. 1 zeigt als Beispiel eine der angesprochenen Armaturen mit Hand- und Motorsteuerung sowie einen Stellantrieb in Schnittdarstellung.

Fig. 2 zeigt eine Gesamtdarstellung des Verfahrens zur Messung und Diagnose motorgetriebener Armaturen in Blockschaubildweise.

Fig. 3 zeigt eine Datenverlaufdarstellung der gemessenen Motorwirkleistung sowie der entsprechenden Schaltersignale bei "Ventilfahrt auf" (Fig. 3a und 3b) und

Fig. 4 eine analoge Darstellung bei "Ventilfahrt zu" (Fig. 4a und Fig. 4b).

Fig. 5 zeigt als Beispiel die gemessene Wirkleistung und die zugehörigen Schaltersignale für ein gestörtes Laufverhalten einer Armatur bei "Ventilfahrt zu".

Fig. 6 zeigt die bei der automatischen Auswertung des Wirkleistungssignals separaten Bereiche im Zeitverlauf für die Bestimmung der Diagnoseparameter (Merkmalsvektor) in schematischer Darstellung.

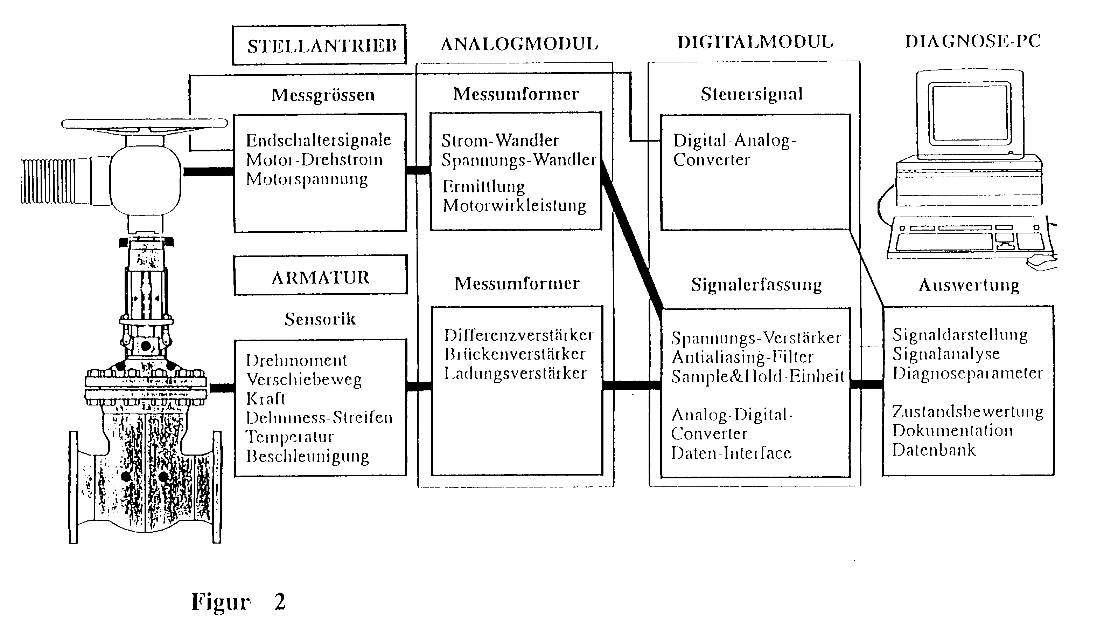

Das Schaubild Fig. 2 der Armaturen-Diagnose zeigt im Bereich Messung die einzelnen Meßgrößen des Stellantriebs wie die Endschaltersignale, den Motordrehstrom, die Motorspannung und die abgeleitete Größe Wirkleistung sowie die Sensorsignale der Armatur wie das Drehmoment, den Verschiebeweg, die Spindelkraft oder die Kraft am Gehäusedeckel, das Dehnmeßsignal,die Temperatur und die Beschleunigung.

Im Bereich Erfassung sind die erforderlichen Meßumformer, wie Strom- und Spannungswandler, Differenz-, Brücken- und Ladungsverstärker als Analogmodul und die Signalerfassung mit Hilfe von Verstärkern, Antialiasing-Filtern, Sample & Hold-Einheit und Analog-Digital-Konvertern, sowie die Ausgabe des Steuersignals für den Stellantrieb als Digitalmodul des Diagnosesystems dargestellt.

Im Bereich Analyse ist die Auswertung mit Signaldarstellung, Signalanalyse, Berechnung der Diagnoseparameter, Zustandsbewertung sowie Dokumentation und Datenbank mit Hilfe eines Diagnose-PC dargestellt.

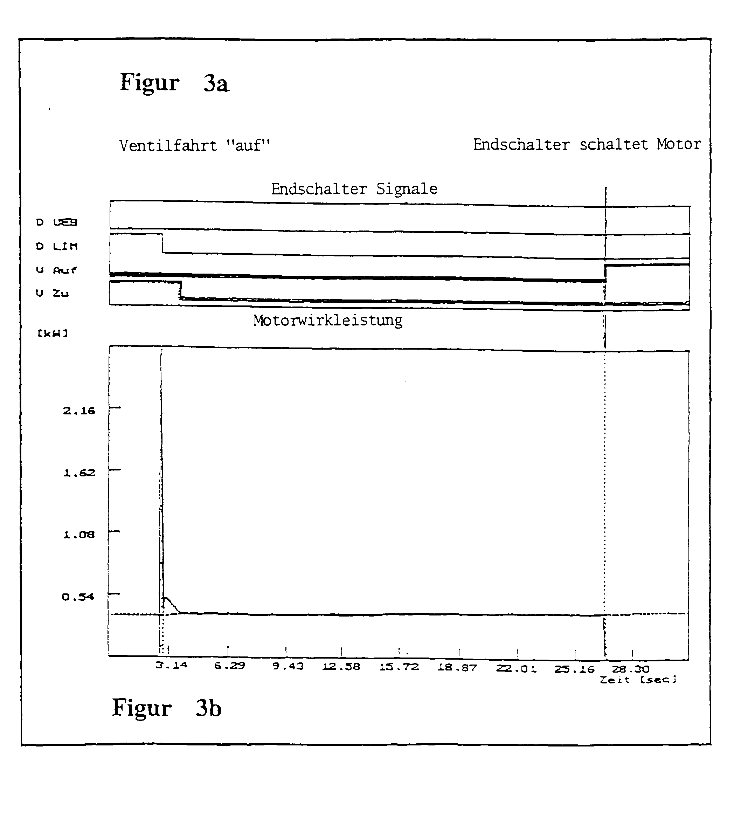

In Fig. 3 schaltet der Wegendschalter den Motor ab wie unter Fig. 3a als Endschaltersignal "V AUF" wiedergegeben. Den zugehörige Wirkleistungsverlauf gibt Fig. 3b wieder.

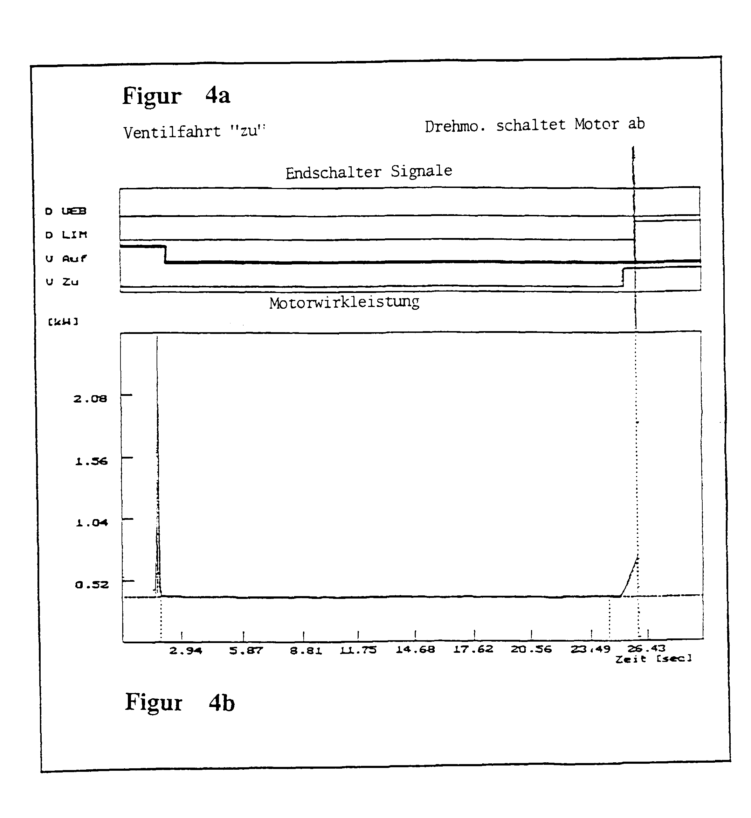

Die Arbeitsweise "Ventilfahrt zu" ergibt sich aus Fig. 4a Endschaltersignale und Fig. 4b wobei der Drehmomentschalter "D LIM" den Motor abschaltet.

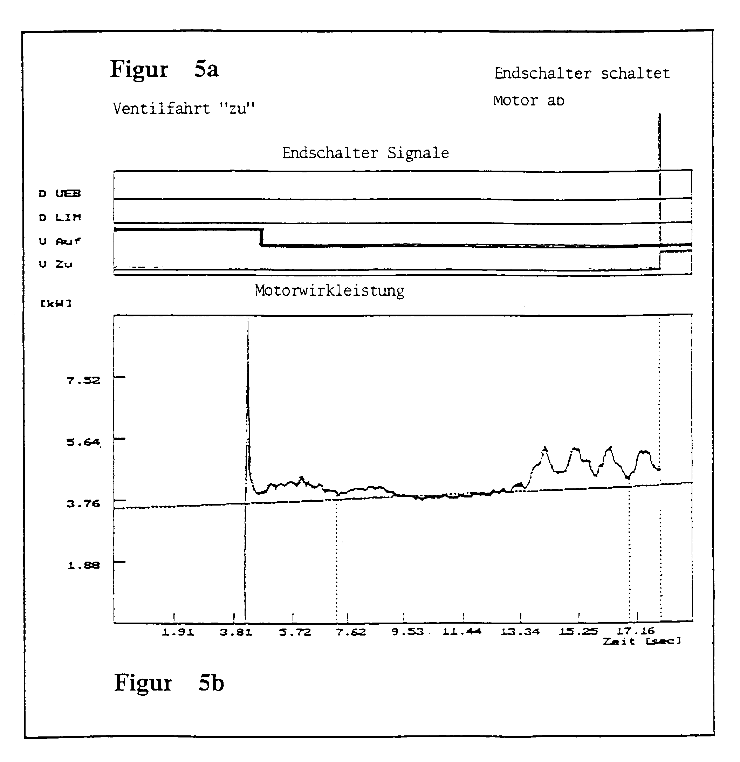

In Darstellung Fig. 5 schaltet der Wegendschalter "V ZU" wie Fig. 5a Endschaltersignale und Fig. 5b Wirkleistungssignal den Stellantrieb ab.

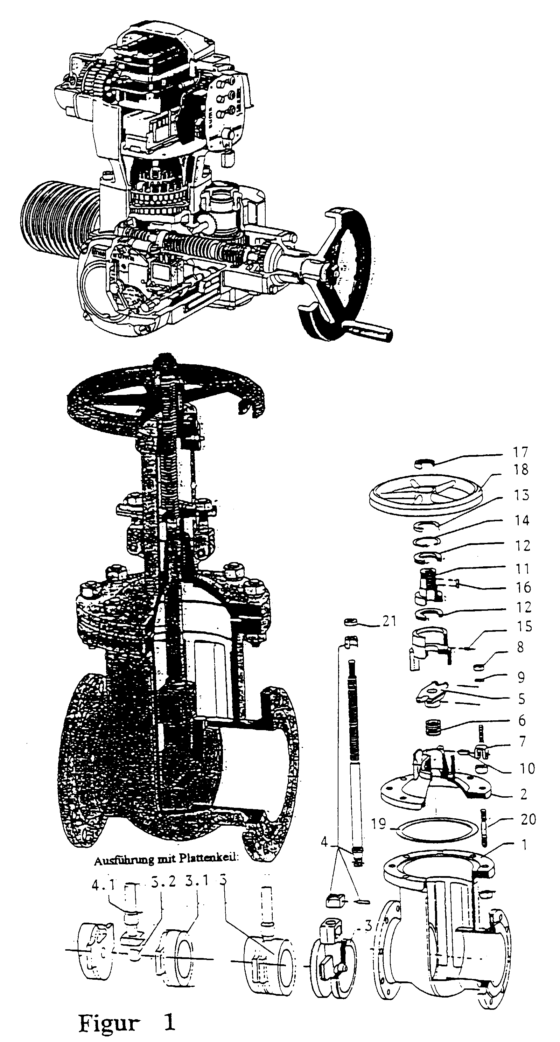

### Bezugszeichenliste zur Fig. 1

### Armatur

### Doppelplatten-Absperrschieber mit außenliegendem Spindelgewinde

- 1: Gehäuse
- 2: Haube
- 3: Elastischer Keil
- 4: Spindel
- 5: Stopfbuchsbrille
- 6: Stopfbuchspackung
- 7: Gabelschraube
- 8: Sechskantmutter
- 9: Scheibe
- 10: Spannhülse
- 11: Spindelmutter
- 12: Axiallager
- 13: Staubkappe
- 14: Sicherungsring
- 15: Schmiernippel
- 16: Paßfeder
- 17: Befestigungsmutter
- 18: Handrad
- 19: Dichtring
- 20: Schraubenbolzen m. Sechskantmuttern
- 21: Sechskantmutter

Ausführung mit Plattenkeil:
- 3.1: Keilplatte
- 3.2: Druckstück
- 4.1: Spindel

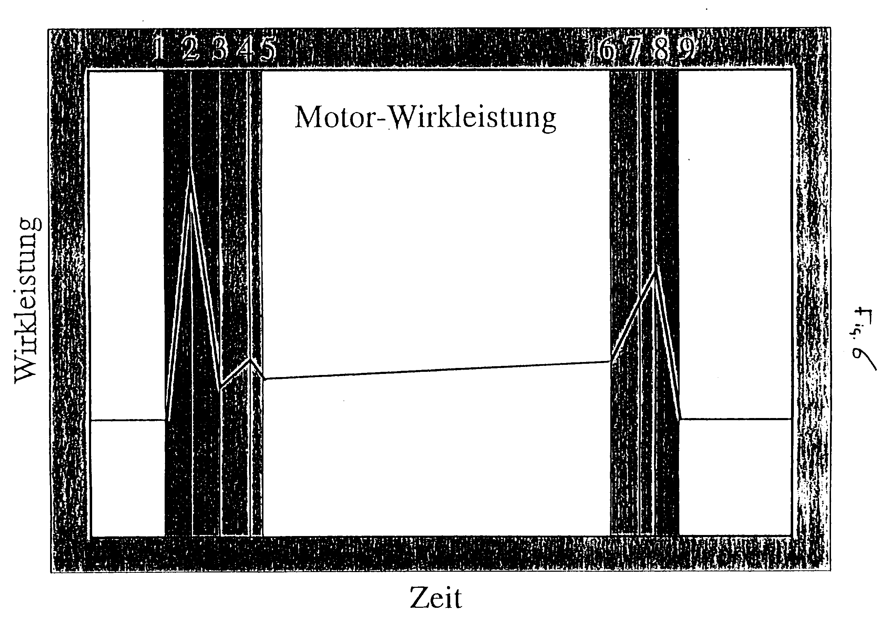

### Bezugszeichenliste zu Fig. 6

**Zeit:**
- 1: Start Antrieb
- 2: Einschaltpeak
- 3: Ende
Einschaltpeak
- 4: Beginn
Spindelbew.
- 5: Beginn
freier Lauf
- 6: Ende
freier Lauf
- 7: Abschaltzeit
- 8: Endlage Sitz
- 9: Ende Laufzeit

## Patentansprüche

1. Verfahren zur Überwachung der betriebssicheren Arbeitsweise und zur vorbeugenden Instandhaltung bzw. Schadensverhütung von Armaturen mit Stellantrieben, insbesondere motorgetriebenen Armaturen, wobei die Armaturen, unter Verwendung von Armaturen-Meßdaten bzw. durch spezifische Meßwertaufhehmerermittlungssignale in funktionseingebundenem eingebauten Zustand überwacht werden,
**dadurch gekennzeichnet**, daß
a) in einer Kalibriermessung auf dem Prüfstand oder im eingebauten Zustand die analytische Abhängigkeit des Antriebssignals, insbesondere der Motorwirkleistung, von dem erforderlichen Drehmoment für die Armaturenspindel bzw. von der Spindelkraft mit Hilfe der Regressionsanalyse bestimmt wird,
b) in Diagnosemessungen im funktionseingebundenem eingebauten Zustand der Armatur Diagnoseparameter oder Merkmale für die Komponente Armatur und die Komponente Stellantrieb separat mit Hilfe der Analyse des Antriebssignals, insbesondere der Motorwirkleistung, und in Verbindung zusätzlicher Meßgrößen wie der Spindelkraft oder der der Spindelkraft proportionalen Kraft am Gehäusedeckel bzw. Gehäuseflansch zwischen Armatur und Stellantrieb sowie des abgeleiteten Drehmomentes auf der Basis statistischer Verfahren ermittelt und z.B. in einer Datenbank abgespeichert werden,
c) Änderungen der definierten Diagnoseparameter bezüglich des Arbeitsbereiches für die Auf- und Zu-Fahrtrichtung der Armatur in Zeitabständen gemessen werden und mit einer Referenzmessung bei gleichen Prüfbedingungen verglichen und separat für Armatur und Stellantrieb als Trend dargestellt werden und
d) Änderungen in bestimmten Parameterzuordnungen oder Merkmalsvektoren für die Diagnose von Armaturen mit Stellantrieb, insbesondere motorgetriebener Armaturen, mit Hilfe von entwickelten Identifikationsverfahren hinsichtlich der Zustandsveränderungen von Armatur und Stellantrieb separat bewertet werden.

2. Verfahren nach Anspruch 1 bei dem eine Separation von Veränderungen in den armaturenspezifischen Arbeits-Reibbeiwerten, z. B. für die Spindel, die Spindelmutter, die Stopfbuchse und die Abdichtfläche auf der Grundlage der Bewertung der ermittelten Merkmalsvektoren erfolgt.

3. Verfahren nach einem der vorhergehenden Ansprüche 1 oder 2, bei dem eine für die vorbeugende Instandhaltung bzw. Schadensverhütung relevante Information zur Unterstützung erforderlicher Maßnahmen ausgegeben wird.

## Claims

1. A method for monitoring the fail-safe operation and for the preventive maintenance and damage prevention of valve units having actuator drives, in particular motor-driven valve units, wherein the valve units are monitored in a functionally-integrated, installed condition by use of valve unit measuring data or by specific transducer detection signals,
characterized in that
a) during a calibration measurement on the testing stand or in an installed condition, the analytic dependency of the drive signal, in particular the active power of the motor from the required torque for the valve unit spindle or from the spindle force is determined by means of the regression analysis,
b) during diagnosis measurements in the functional-integrated installed condition of the valve unit, diagnosis parameters or features of the component valve unit and the component actuator drive are determined separately by means of the analysis of the drive signal, in particular the active power of the motor, and in connection with additional measuring variables such as the spindle force or the force at the housing lid or at the housing flange between the valve unit and the actuator drive proportional to the spindle force and the derived torque on the basis of statistical methods, and these parameters are stored for instance in a data base,
c) changes of the defined diagnosis parameters regarding the working range for the opening and closing moving direction of the valve unit are measured in time intervals and are compared to a reference measurement at the same test conditions, and are indicated separately for the armature and the actuator drive as a trend, and
d) changes in certain parameter assignments or feature vectors are separately evaluated for the diagnosis of valve units having actuator drives, in particular motor-driven valve units, by means of developed identification methods regarding the change of state of the valve unit and the actuator drive.

2. A method as claimed in claim 1 in which a separation of changes in the valve unit-specific working frictional co-values, e.g for the spindle, the spindle not, the gland and the sealing surface is performed on the basis of the evaluation of detected feature vectors.

3. A method as claimed in one of the preceding claims 1 or 2, in which an information relevant for the preventive information or the loss prevention is output for supporting required measures.

## Revendications

1. Procédé pour surveiller le fonctionnement en toute sécurité, et pour l'entretien préventif, ou respectivement la prévention des dommages dans des robinetteries comportant des servomoteurs, en particulier des robinetteries à entraînement motorisé, dans lequel les robinetteries sont surveillées dans l'état monté en fonctionnement en utilisant des données de mesures relatives à la robinetterie, ou respectivement des signaux déterminés par des capteurs de mesure,
caractérisé en ce que :
a) par une mesure de calibrage sur banc d'essai, ou bien à l'état monté, on détermine la dépendance analytique du signal d'entraînement, en particulier de la puissance efficace du moteur, à partir du couple de rotation nécessaire pour la broche de robinetterie, ou bien à l'aide de la force sur la broche, à l'aide d'une analyse de régression,
b) par des mesures de diagnostic dans l'état monté en fonctionnement de la robinetterie, on détermine des paramètres de diagnostic ou des caractéristiques pour le composant représenté par la robinetterie et pour le composant représenté par le servomoteur de façon séparée à l'aide de l'analyse du signal d'entraînement, en particulier de la puissance efficace du moteur, et en combinaison avec des valeurs de mesure additionnelles telles que la force sur la broche, ou bien la force proportionnelle à la force de la broche mesurée au niveau du couvercle de boîtier, ou de la bride de boîtier entre la robinetterie et le servomoteur, ainsi que du couple de rotation dérivé, en se basant sur un procédé statistique, et on les mémorise par exemple dans une base de données,
c) on mesure à des intervalles temporels les modifications des paramètres de diagnostic définis par référence à la plage de travail pour la direction d'ouverture et de fermeture de la robinetterie, et on les compare à une mesure de référence dans les mêmes conditions d'essai, puis on les présente séparément pour la robinetterie et pour le servomoteur sous forme de tendances, et
d) on évalue séparément des modifications dans des associations déterminées entre les paramètres, ou bien des vecteurs caractéristiques pour le diagnostic de robinetteries avec servomoteur, en particulier de robinetteries entraînées par moteur, à l'aide de procédés d'identification développés en ce qui concerne des modifications d'état de la robinetterie et du servomoteur.

2. Procédé selon la revendication 1, dans lequel on procède à une séparation des modifications dans les valeurs de friction en fonctionnement spécifique à la robinetterie, par exemple pour la broche, pour l'écrou de broche, pour la douille de bouchage, et pour la surface d'étanchement, en se basant sur l'évaluation des vecteurs caractéristiques déterminés.

3. Procédé selon l'une ou l'autre des revendications 1 et 2, dans lequel on délivre une information pertinente pour l'entretien préventif, ou bien pour l'empêchement de dommages, afin d'assister les mesures nécessaires.
